Europäisches Patentamt

European Patent Office

Office européen des brevets

(11) Publication number: 0 280 660
A2

# EUROPEAN PATENT APPLICATION

(21) Application number: 88830055.5

(22) Date of filing: 16.02.88

(51) Int. Cl.⁴: H 02 K 9/19
H 02 K 5/132

(30) Priority: 17.02.87 IT 1941087

(43) Date of publication of application:
31.08.88 Bulletin 88/35

(84) Designated Contracting States:
DE ES FR GB GR NL

(71) Applicant: EKOCHEMIE S.R.L.
Corso di Porta Romana, 84
I-20122 Milano (IT)

(72) Inventor: Spina, Nicola, Dr.
Via Triulziana 22
S. Donato Milanese Milano (IT)

(74) Representative: Righetti, Giuseppe
Bugnion S.p.A. Via Carlo Farini, 81
I-20159 Milano (IT)

(54) Immersed electric motor to operate pumps and the like.

(57) An immersed electric motor (1) comprises a support structure (2) housing a stator (11) surrounding a rotor (14) in turn keyed on a hollow drive shaft (12). The drive shaft (12) is rotatably guided at its respective opposite ends, within engagement housings (15, 16) fastened to the support structure (2) and is supported by a thrust bearing (20) acting between a locator means (19) supporting one of the engagement housings (16) and an abutment (21) disposed on the drive shaft. In operation, holes (22, 23, 24) provided in the drive shaft (12) produce a centrifugation effect on the lubricating and cooling fluid with which the support structure (2) had been previously filled, causing the forced circulation of the same through the thrust bearing (20) and engagement housings (15, 16), as well as through cooling ducts (25) formed between the stator (11) and support structure (2).

FIG 1

Bundesdruckerei Berlin

**Description**

## IMMERSED ELECTRIC MOTOR TO OPERATE PUMPS AND THE LIKE

The present invention relates to an immersed electric motor, in particular to operate pumps and the like. In greater detail the motor in question is of the type currently associated with centrifugal pumps which, being introduced into groundwaters through perforations suitably formed in the ground, act so as to send the water present therein to the surface.

It is known that immersed electric motors are essentially comprised of a support structure in which a stator is fixedly housed. Inside said support engagement housings in which a drive shaft is rotatably located are also provided.

Keyed on the drive shaft is a rotor which is disposed within the stator in coaxial relation. The drive shaft further extends to form a connecting shank projecting from the support structure. Provision is also made for at least a thrust bearing which in present day solutions acts between the drive shaft and the support structure thereof on the side opposite the connecting shank.

The lubrication of the different members housed in the support structure is carried out by a lubricating liquid with which the support structure itself is filled. In most cases this lubricating liquid merely consists of water possibly added with emulsifiable oils, anticorrosive, antifreezing and lubricating substances and/or still other substances.

In operation the motor is vertically disposed below the pump it is associated with, and it is made integral to the fixed part of the latter through said support structure. At the same time the connecting shank engages the shaft of the pump impellers in order to impart them the necessary rotatory motion in operation.

From the above summary description it is apparent that motors of the above type are presently subjected to different problems.

One of them is originated from the fact that being the thrust bearing disposted at the lower part of the motor due to lubrication requirements, the drive shaft is usually submitted to combined bending and compressive stresses that are transmitted to the same by effect of the pump weight, as well as of the pipe associated therewith and of the column of liquid in the pipe.

In this connection it is pointed out that motors of the type in reference always have a very narrow and elongated configuration as they must be easily inserted through the perforations formed in the ground as far as they reach the corresponding groundwaters. As a result, in motors of this type the drive shaft always has an important length which consequently restricts its flexural strength.

Under this situation the drive shaft often bends under the action of the above mentioned combined bending and compressive stresses, to which it is necessary to add the bending stresses generated due to the electromagnetic forces involved during the motor operation.

It can be easily understood that the drive shaft bending immediately brings about a physical contact between rotor and stator, resulting in heavy consequences on the operation and integrity of the motor as a whole.

In order to reduce the risks of a drive shaft bending, it is necessary to oversize the latter and, above all, to restrict the longitudinal development of the motor. But the power reached by the motor is proportionally related to the longitudinal development of the same, its diameter being equal. It is therefore clear that a restriction in the longitudinal development of the motor brings about a restriction in the attainable power.

In addition, the presence of the above discussed anomalous stresses gives rise to various problems concerning the wear of the different members, and in particular the bearings located in the engagement housings, which consequently must be oversized and all the same periodically replaced.

A further presently unsolved problem relates to motor cooling in operation. It is in fact noted that heat produced in the stator and particularly in the rotor in operation is not efficiently disposed of to the outside, in spite of the motor usually running immersed in cool water and being wholly filled with lubricating fluid exhibiting a relatively high thermal capacity.

This is essentially due to the fact that it has not yet been possible to appropriately exploit the presence of the lubricating fluid for motor cooling purposes. In fact the lubricating fluid is currently disposed in the upper and lower parts of the motor and it is almost stationary and only the least part thereof occupies the hollow spaces existing between the rotor and stator, close to which all heat it is necessary to get rid of, is produced.

Consequently the rotor and particularly the stator reach high temperatures in operation and this factor brings about a further restriction in the power the motor can reach.

A further drawback of the known art resides in the problems arising when, due to particular uses, the motor must take a horizontal orientation. In order that present day motors may be able to operate under these conditions it is necessary to replace the above described engagement housings and bearings associated therewith or to add further support bearings on the drive shaft. This is due to the fact that the lubrication offered by the fluid wholly filling the motor internally can only be sufficient when the motor is disposed vertically. Vice-versa, when the motor is disposed in a horizontal direction and therefore loads acting in the region of the engagement housings are increased, the same lubrication appears inadequate.

It is an object of the present invention to solve the drawbacks found in the prior art by providing an immersed electric motor which is not subjected to combined bending and compressive stresses on the drive shaft while at the same time allowing an efficient elimination of the heat produced in operation as well as an optimal lubrication under all use conditions.

The foregoing and further objects that will become more apparent in the course of the present description are substantially attained by an immersed electric motor to operate pumps and the like, comprising:
- a support structure;
- a stator fixed within the support structure;
- a rotor mounted in the stator in coaxial relation;
- a drive shaft fixedly supporting the rotor in coaxial relation;
- a connecting shank extending coaxially with the drive shaft and projecting from the support structure to be connected to a pump;
- a first engagement housing fastened to the support structure and rotatably engaging the drive shaft in coaxial relation on the side thereof opposite the connecting shank;
- a second engagement housing fastened to the support structure and rotatably engaging the drive shaft in coaxial relation on the side of the connecting shank;
- at least a thrust bearing acting between the drive shaft and the support structure, said structure being hermetically sealed with respect to the surrounding atmosphere and filled with lubricating fluid, characterized in that said drive shaft comprises a tubular body open on its side opposite that carrying the connecting shank and provided with at least a through hole disposed substantially radially at the end thereof adjacent the connecting shank.

Further features and advantages will best be understood from the detailed description of a preferred embodiment of an immersed electric motor, in particular to operate pumps and the like, according to the present invention, given hereinafter by way of non limiting example with reference to the accompanying drawings, in which:
- Fig. 1 is a partially broken diagrammatic sectional view of a motor according to the invention, taken along line I-I of Fig. 2;
- Fig. 2 is a diagrammatic sectional view of the motor taken diametrically along line II-II of Fig. 1.

Referring to the drawings it has been globally identified by reference numeral 1 an immersed electric motor to operate pumps and the like in accordance with the present invention.

Motor 1 comprises a support structure 2 substantially consisting of a casing 3 of cylindrical tubular form closed at the opposed ends thereof by a lower closing portion 4 and an upper closing portion 5 respectively. The lower closing portion 4 comprises a tubular link element 6 fixedly engaged at the inside of casing 3, and a bottom cover 7 fastened to the link element 6. In a manner known in itself, the bottom cover 7 is passed through by at least a hole 7a and along its periphery it engages, in cooperation with the lower edge of link element 6, a compensating diaphragm 8 not described herein as known per se and not important to the ends of the present invention.

Similarly to the lower closing portion 4, the upper closing portion 5 comprises a tubular link element 9 fixedly engaged at the inside of casing 3, and a top cover 10 fastened to the link element 9.

A stator 11 of cylindrical hollow form is integrally housed within the casing 3. Stator 11 is passed through in coaxial relation by a drive shaft 12 from the upper end of which a connecting shank 13 coaxially extends, the latter projecting from the support structure 2 after sealingly crossing the top cover 10.

A rotor 14 is keyed on the drive shaft 12; still in a manner known per se and conventional, it is mounted in coaxial relation within the stator 11 and has an outer diameter slightly smaller than the inner diameter of stator 11. Drive shaft 12 is rotatably supported at its opposite ends by a first engagement housing 15 and a second engagement housing 16 respectively, both being integral to the support structure 2 and provided with respective bushings 15a and 16a.

In greater detail, it is preferred that the first engagement housing 15 should be integrally connected to the link element 6 of the lower closing portion 4, through a connecting ring 17 provided with through holes 18. The second engagement housing 16, in turn, is formed integrally with the link element 9 of the upper closing portion 5, to which it is connected through a second connecting ring 19 disposed radially to the drive shaft 12.

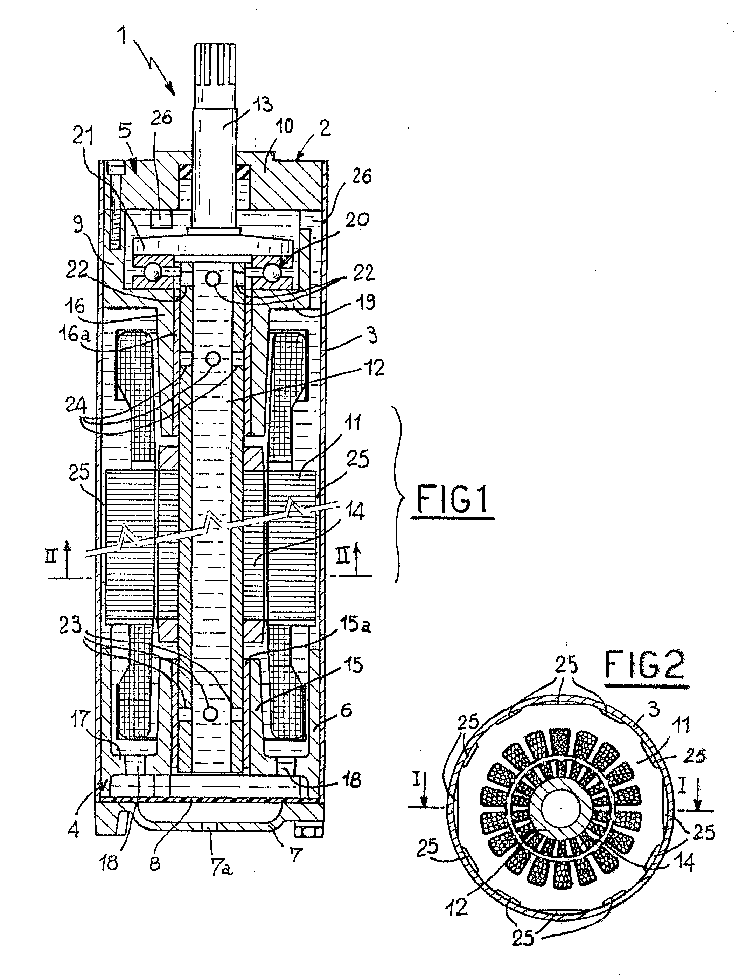

In addition, associated with the drive shaft 12 is at least a thrust bearing 20, diagrammatically shown in Fig. 1. Advantageously and in an original manner, the thrust bearing 20 is disposed at the end of shaft 12 from which the shank 13 extends and acts between an abutment 21 located on the drive shaft and a locator means integral to the support structure 2. In the embodiment shown the locator means acted upon by the thrust bearing 20 consists of the above described connecting ring 19.

Advantageously, in accordance with the present invention, the drive shaft 12 is substantially comprised of a tubular body open on its side opposite the connecting shank 13 and provided with one or more through holes 22 that cross it substantially radially in the region of its end adjacent the connecting shank 13. As is possible to see in Fig. 1, in accordance with a preferred embodiment, through holes 22 are substantially located at the same height as the thrust bearing 20, that is in the portion extending between the abutment 21 and the locator means consisting of the connecting ring 19.

Advantageously the presence of auxiliary through holes identified by reference numerals 23 and 24 can also be provided; through holes 23 and 24 are located in the region of the first engagement housing 15 and second engagement housing 16 respectively.

As more clearly shown in Fig. 2, in accordance with a further feature of the invention it is also provided that a plurality of cooling ducts 25 should be accomplished between stator 11 and casing 3, which ducts are suitably distributed around the circumferential extension of stator 11.

In a manner known per se, the support structure 2 is previously filled with a lubricating fluid, which appears therefore distributed in all hollow spaces provided in the structure itself, as well as inside the drive shaft 12. Said lubricating fluid can merely consist of water to which emulsifiable oils, antifreezing substances and/or other substances may be added.

Operation of the electric motor according to the invention described above mainly as regards structure, is as follows.

Motor 1 can be associated with a respective pump not shown as not important to the ends of the invention, by fixedly connecting the support structure 2 to the fixed portion of the pump itself. At the same time the connecting shank 13 is conventionally connected to the drive shaft of the pump impellers, in order to impart the pump a rotatory motion.

When motor 1 is running, holes 22, 23 and 24 produce a centrifugation effect on the fluid filling the inside of the drive shaft 12. As a result, the fluid containted in the drive shaft 12 is ejected therefrom causing the forced lubrication of the thrust bearing 20 and bushings 15a and 16a provided in the engagement housings 15 and 16. The lubricating fluid passed through the thrust bearing 20 is then forced to pass through one or more outflow openings 26 formed in the tubular link element 9 of the upper closing portion 5 so that it comes close to the spaces located above the stator 11. Then the lubricating fluid is therefrom sent into the lower part of the motor through the cooling ducts 25 as well as, to a smaller amount, into the hollow space existing between stator 11 and rotor 12. At the lower part of the motor the lubricating fluid has to pass through holes 18 provided in the connecting ring 17 so that it enters the drive shaft 12 again.

During this circulation the lubricating fluid is advantageously in a position to take heat from rotor 14 when it goes through the drive shaft 12 so that it may then yield it to the surrounding atmosphere passing through the cooling ducts 25.

The present invention attains the intended purposes.

In fact it is noted that the above described forced circulation of the lubricating fluid is adapted to ensure an efficient cooling to the motor allowing greater powers to be reached as compared with the prior art, the motor sizes being equal. Furthermore, being the thrust bearing lubricated by said forced circulation, it is possible to dispose the latter at the upper part of the motor so that the combined bending and compressive stresses to which the drive shaft should be subjected if the thrust bearing had been disposed at the lower part of the motor can advantageously be eliminated.

The elimination of said combined bending and compressive stresses from the drive shaft, in turn allows the construction of very long motors, adapted to deliver much greater powers with respect to those achieved until now by the use of motors of this type.

In addition, the arrangement of bearing 20 at the upper part of the motor allows the elimination of most loads that in prior art solutions were transmitted along the support structure 2. As a result the latter can be made simpler and its construction will be less expensive than prior art solutions. In particular plastic material can be advantageously used to make the lower closing portion 4 and top cover 10, which pieces in the prior art had to be made of metal or anyway of materials having a high mechanical resistance. Furthermore the casing 3 can be of thinner thickness than in the prior art, which further promotes the heat exchange with the surrounding atmosphere.

As it is possible to achieve the forced lubrication of the bushings supporting the drive shaft, the motor can operate even when it is disposed in a horizontal direction without being necessary to have recourse to the use of special bushings or support bearings.

Obviously many modifications and variations can be made to the present invention without departing from the scope of the inventive idea characterizing it.

**Claims**

1. An immersed electric motor to operate pumps and the like, comprising:
- a support structure (2);
- a stator (11) fixed within the support structure (2);
- a rotor (14) mounted in the stator (11) in coaxial relation;
- a drive shaft (12) fixedly supporting the rotor(14) in coaxial relation;
- a connecting shank (13) extending coaxially with the drive shaft (12) and projecting from the support structure (2) to be connected to a pump;
- a first engagement housing (15) fastened to the support structure (2) and rotatably engaging the drive shaft (12) in coaxial relation on the side thereof opposite the connecting shank (13);
- a second engagement housing (16) fastened to the support structure (2) and rotatably engaging the drive shaft (12) in coaxial relation on the side of the connecting shank (13); and
- at least a thrust bearing (20) acting between the drive shaft (12) and the support structure (2), said support structure (2) being hermetically sealed with respect to the surrounding atmosphere and filled with lubricating liquid, characterized in that said drive shaft (12) comprises a tubular body open on its side opposite that carrying the connecting shank (13) and provided with at least a through hole (22) disposed substantially radially at the end thereof adjacent the connecting shank (13) so that a forced cooling circulation of said lubricating fluid at the inside of the motor is achieved.

2. The motor as claimed in claim 1, characterized in that cooling ducts (25) are formed between said support structure (2) and the stator (11) to perform the forced circulation of said lubricating fluid.

3. The motor as claimed in claim 1, characterized in that said thrust bearing (20) acts between a locator means (19) integral to the support structure (2) and an abutment (21) disposed on the drive shaft (12) close to the

7 **0 280 660** 8

end thereof supporting the connecting shank (13).

4. The motor as claimed in claims 1 and 3, characterized in that said holes (22) are located between said abutment (21) and locator means (19).

5. The motor as claimed in claim 1, characterized in that said drive shaft (12) is provided with auxiliary holes (23, 24) disposed in the region of said engagement housings (15, 16).

6. The motor as claimed in claims 1 and 3, characterized in that said locator means (19) consists of a connecting ring linking the second engagement housing (16) to the support structure (2).

0280660

FIG1

FIG2